# EUROPEAN PATENT APPLICATION

(11) **EP 2 405 128 A1**
(43) Date of publication of application: **11.01.2012**
(21) Application number: 10841806.2
(22) Date of filing: 15.10.2010
(51) Int. Cl.: F03B 13/26, F03B 13/12, F03B 15/00, E02B 9/08

(54) **ELECTRICITY GENERATING METHOD AND SYSTEM**

(30) Priority: 10.05.2010 CN 201010174497
(71) Applicant: The Second Institute of Oceanography, SOA, Zhejiang 310012 (CN)
(72) Inventor: XU, Xuefeng, Zhejiang 310012 (HK); YANG, Tianzhu, Zhejiang 310012 (HK)
(74) Representative: Prinz & Partner
(86) International application number: PCT/CN2010/077771
(87) International publication number: WO 2011/140781

(57) **Abstract**

A method and a system for generating electricity, which are used in tidal power generation, including a flow passage (420) for communicating the water between an inner part and an outer part of a bay, a power generating device (430) installed within the flow passage (420), and tide gauges (410) provided at two ends of the flow passage. The tide gauges (410) monitor in real time a dynamic water level difference between the inner part and the outer part of the bay with the tide gauges; determine whether the monitored dynamic water level difference is greater than a minimum dynamic water level difference for driving the power generating device (430); the power generating device (430) is driven to generate electricity with the monitored dynamic water level difference when the monitored dynamic water level difference is greater than the minimum dynamic water level difference. With the method and system for generating electricity, the service life of the power station is longer and the maintenance cost is less.

## Description

The present application claims the benefit of priority of Chinese patent application No. 201010174497.0 entitled "METHOD AND SYSTEM FOR GENERATING ELECTRICITY", filed on May 10, 2010 with State Intellectual Property Office of PRC, which is incorporated herein by reference in its entirety.

### FIELD OF THE INVENTION

The present application relates to the technical field of tidal power generation, and particularly relates to a method and a system for generating electricity using tidal energy.

### BACKGROUND OF THE INVENTION

A tidal power station is a station which converts the ocean tidal energy into electrical energy, and it is the only type of ocean energy power station which has been put into practical application. A reservoir is formed by constructing a dam in a bay or at an estuary where there is tide. The reservoir may store water at rising tide, and may release water at falling tide due to the lowed sea level, so as to drive hydro-generators to generate electricity. There are, generally, three types of tidal power stations, i.e. one-reservoir-and-one-way type (having one reservoir, and generating electricity by releasing water at falling tide), one-reservoir-and-two-way type (having one reservoir, and generating electricity both at rising and falling tide), and two-reservoir-and-one-way type (generating electricity by use of two reservoirs always remaining different water levels).

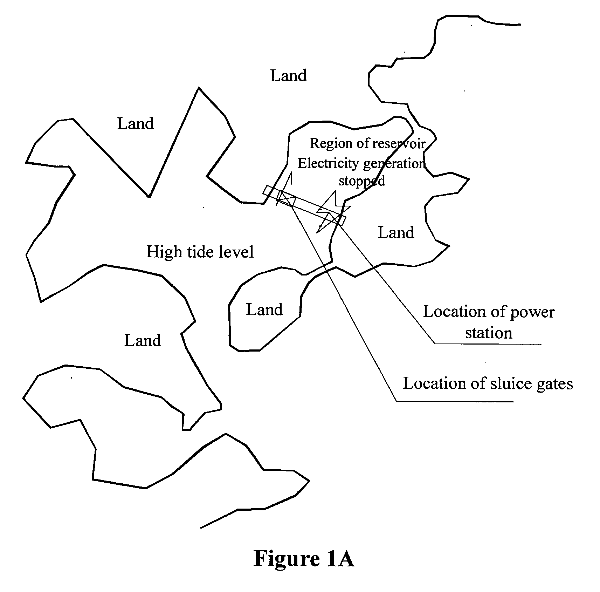

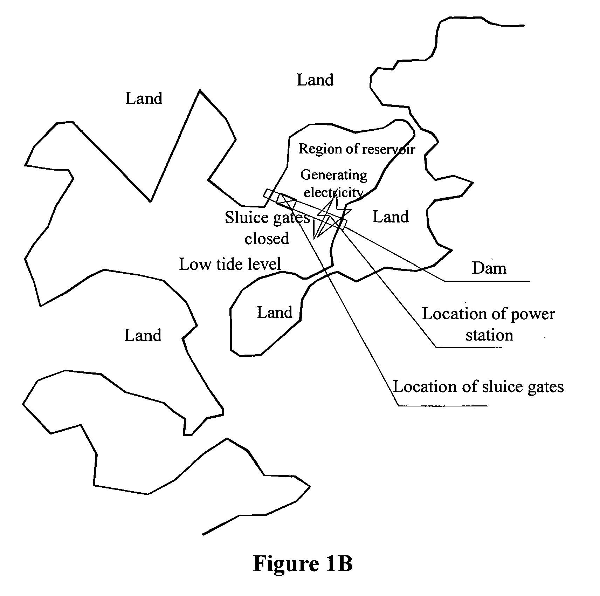

Fig.1A and Fig.1B are schematic diagrams respectively showing that in the prior art the tidal power station opens sluice gates to store water during high-tide level period and keeps the sluice gates closed to generate electricity during low-tide level period. The prior tidal power station includes a dam, sluice gates, and power plant. In Fig.1A, during the high-tide level period, the sluice gates are opened and water is stored in the reservoir; the sluice gates are closed when the water level in the reservoir rises to a maximum. In Fig.1B, during the low-tide level period the sluice gates are kept in close state, and when there is a certain water level difference between the inside and the outside of the reservoir, power devices are switched on to generate electricity.

In studying and practicing the prior art, the present inventors discover that conventional tidal power station costs a lot since it needs a dam to be constructed in the inner part of the bay. Furthermore, due to the limitation of the storage capacity of the reservoir, the installed generating capacity of the power station is limited. For instance, the installed generating capacity of the largest power station in the world is only 240,000kW, and the installed generating capacity of the largest power station in China is only 3,900kW. Closing a bay by constructing a dam will cause great silting in the bay and the reservoir area, which affects the service life of the power station and increases the maintenance cost. In addition, damming a bay will affect the migration of fishes and the exchange between the bay water and the sea water, which may destroy the ecological environment of the bay. On account of the above-mentioned drawbacks, the further development of the current tidal power station is restricted, with the abundant resource of tidal energy wasted.

### SUMMARY OF THE INVENTION

The objective of the embodiment of the invention is to provide a method and a system for generating electricity which utilizes the dynamic water level difference caused by the tidal wave discrepancy between the inner part and the outer part of the bay to generate electricity, so as to solve the problems in the prior art that the tidal power system needs a dam to be constructed, thus cost is too much and it is difficult to make full use of the tide as a resource.

For this purpose, embodiments of the present application provide the following technical solutions:

A method for generating electricity, which is used in tidal power generation, and according to the method, a flow passage for communicating the water between an inner part and an outer part of a bay is provided, a power generating device is installed within the flow passage, and tide gauges are provided at two ends of the flow passage. The method comprises:
monitoring in real time a dynamic water level difference between the inner part and the outer part of the bay with the tide gauges;
determining whether the monitored dynamic water level difference is greater than a minimum dynamic water level difference for driving the power generating device; and
driving the power generating device to generate electricity with the monitored dynamic water level difference when the monitored dynamic water level difference is greater than the minimum dynamic water level difference.

Monitoring in real time the dynamic water level difference between the inner part and the outer part of the bay with the tide gauges includes:
monitoring, with the tide gauges, that a tide level of the inner part of the bay is higher than that of the outer part of the bay, and determining there is a positive water level difference between the inner part and the outer part of the bay.

Monitoring in real time the dynamic water level difference between the inner part and the outer part of the bay with the tide gauges includes:
monitoring, with the tide gauges, that a tide level of the outer part of the bay is higher than that of the inner part of the bay, and determining there is a negative water level difference between the inner part and the outer part of the bay.

The power generating device includes a two-way tidal power bulb tubular hydrogenerator set.

Specifically, driving the power generating device to generate electricity with the monitored dynamic water level difference is driving the two-way tidal power bulb tubular hydrogenerator set with the dynamic water level difference to perform two-way generating electricity.

A system for generating electricity, which is used in tidal power generation, the system comprising a flow passage, a power generating device and tide gauges, wherein:
the flow passage is to communicate the water between an inner part and an outer part of a bay;
the tide gauges are provided respectively at two ends of the flow passage to monitor in real time a dynamic water level difference between the inner part and the outer part of the bay, and to determine whether the dynamic water level difference is greater than a minimum dynamic water level difference for driving the power generating device; and
the power generating device is provided within the flow passage to generate electricity by utilizing the monitored dynamic water level difference when the tide gauges determine that the monitored dynamic water level difference is greater than the minimum dynamic water level difference.

The tide gauges are specifically configured to monitor that a tide level of the inner part of the bay is higher than that of the outer part of the bay and to determine that there is a positive water level difference between the inner part and the outer part of the bay.

The tide gauges are specifically configured to monitor that a tide level of the outer part of the bay is higher than that of the inner part of the bay and to determine that there is a negative water level difference between the inner part and the outer part of the bay.

The power generating device includes a two-way tidal power bulb tubular hydrogenerator set.

The power generating device is specifically configured to drive the two-way tidal power bulb tubular hydrogenerator set with the dynamic water level difference to perform two-way electricity generation.

It is apparent that the embodiments of the present application utilize the dynamic water level difference caused by the tidal wave discrepancy to generate electricity. In the embodiments, a flow passage is provided to communicate the water between the inner part and the outer part of the bay, a power generating device is installed within the flow passage, and tide gauges are provided respectively at the two ends of the flow passage. When it is monitored that there is a dynamic water level difference between the inner part and the outer part of the bay and the dynamic water level difference is greater than the minimum dynamic water level difference for driving the power generating device, the monitored dynamic water level difference is utilized to drive the power generating device to generate electricity. Since the embodiments of the present application utilize the dynamic water level difference caused by the tidal wave discrepancy to generate electricity and it is not necessary to construct a dam or a reservoir, the investment in generating electricity is less; and it is not likely to result in silting within the bay or the reservoir region, so that the service life of the power station is longer and the maintenance cost is less. As the water in both the inner part and the outer part of the bay can be used for generating electricity, the energy output does not tend to be limited by the storage capacity of a reservoir and the installed generating capacity may be larger. In addition, since the dynamic water level difference between the inner part and the outer part of the bay, which is utilized for generating electricity, is continued, the electricity generation may continue for a longer time. Besides, the ecology and environment around the bay may be affected less for there is no need to dam the bay.

### BRIEF DESCRIPTION OF THE DRAWINGS

Technical solutions of the embodiments of the present applicant and/or the prior art will be illustrated more clearly with the following brief description of the drawings. Apparently, the drawings referred in the following description constitute only some embodiments of the invention. Those skilled in the art may obtain some other drawings from these drawings without any inventive labor.

Fig.1A is a schematic diagram showing that in the prior art the tidal power station opens the sluice gates to store water during the high-tide level period;

Fig.1B is a schematic diagram showing that in the prior art the tidal power station keeps the sluice gates close to generate electricity during the low-tide level period;

Fig.2 is a flowchart of an embodiment of the method for generating electricity according to the present application;

Figs.3A to 3D are schematic diagrams showing that the present application utilizes the dynamic water level difference between the inner part and the outer part of the bay to perform tidal electricity generation; and

Fig.4 is a structural diagram of an embodiment of the system for generating electricity according to the present application.

### DETAILED DESCRIPTION

The embodiments in the present application provide a method and a system for generating electricity using tidal energy. In the embodiments, a flow passage is arranged to communicate the water between the inner part and the outside of a bay, and tide gauges are provided at the two ends of the flow passage respectively to monitor in real time the dynamic water level difference resulting from the tidal wave discrepancy between the inner part and the outside of a bay. A power generating device is provided in the flow passage, and is driven to generate electricity by the monitored dynamic water level difference. In the present application, there is no need for a dam to be constructed at the bay, and no need for a reservoir, therefore the cost in generating electricity and maintenance is lower, and the service life of the station is longer; and without the limitation of the reservoir storage capacity, the installed generating capacity can be larger.

The technical solutions of the embodiments according to the present application will be described in more details with reference to the attached drawings, to make the solutions better understood by those skilled in the art and to make the above objectives, features, and advantages of the embodiment clearer.

The embodiments of the present application may make full use of the tidal energy. The tidal waves have the characteristics of long period waves. When the tidal waves arrive at the bay, transformation occurs, and the nature and the tide time of the tidal waves in the inner part and the outer part of the bay are different, which leads to a dynamic water level difference between the inner part and the outer part of the bay. The dynamic water level difference may be a positive water level difference or a negative water level difference. With this basis, in the embodiments according to the present application, a flow passage is cut in the inner part of the bay, to communicate the water between the outside and the inside of the bay, and in the flow passage a power generating device and tide gauges for monitoring the dynamic water level difference are installed, so that the dynamic water level difference between the outside and the inside of the bay can be utilized to perform two-way electricity generation.

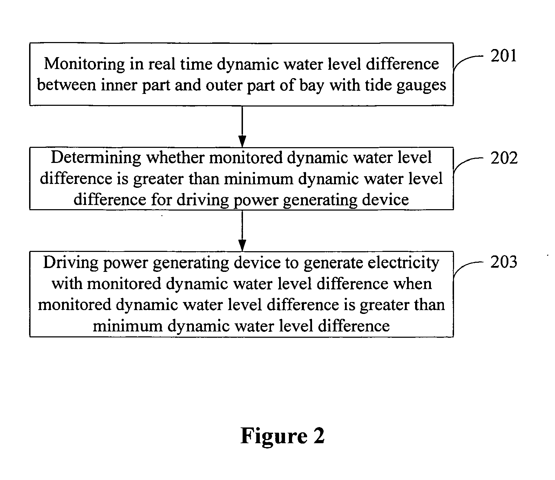

Fig. 2 is a flowchart of an embodiment of the method for generating electricity using tidal energy according to the present application.

Step 201: monitoring in real time, with tide gauges, the dynamic water level difference between the inner part and the outer part of the bay.

Two tide gauges may be provided respectively at the two ends of the flow passage, one of which tide gauges monitors the change in the tide level of the inner part of the bay while the other monitors the change in the tide level of the outer part of the bay.

Based on the real-time monitor results of the tide gauges, the dynamic water level difference between the inner part and the outer part of the bay can be determined. There are several cases as follows: when it is monitored that the tide level in the inner part of the bay is higher than that of the outer part of the bay, a positive water level difference exists between the tide levels of the inner part and the outer part of the bay; and when it is monitored that the tide level of the outer part of the bay is higher than that of the inner part of the bay, a negative water level difference exists between the tide levels of the inner part and the outer part of the bay.

Step 202: determining whether the monitored dynamic water level difference is greater than a minimum dynamic water level difference for driving the power generating device to generate electricity.

Step 203: when the monitored dynamic water level difference is greater than the minimum dynamic water level difference, driving the power generating device with the monitored dynamic water level difference to generate electricity, and then ending the procedure.

When the dynamic water level difference is a positive water level difference, and it is greater than the productive head (i.e. the minimum dynamic water level difference for driving the power generating device to generate electricity) of the power generating device, the power generating device is driven to generate electricity in a forward direction; when the dynamic water level difference is a negative water level difference, and is greater than the productive head of the power generating device, the power generating device is driven to generate electricity in a reverse direction; and when the dynamic water level difference is less than the productive head of the power generating device, the power generating device is switched off and electricity generation is stopped.

The power generating device includes a two-way tidal power bulb tubular hydrogenerator set, which is driven by the dynamic water level difference resulting from the tidal wave discrepancy between the inner part and the outer part of the bay to perform two-way electricity generation.

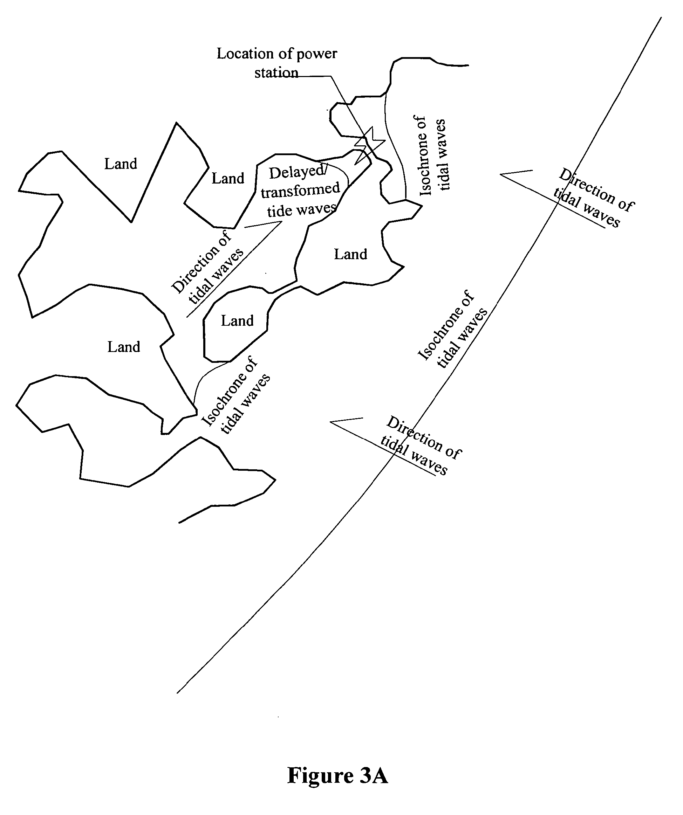

Figs.3A to 3D are schematic diagrams showing that the present application utilizes the dynamic water level difference between the inner part and the outer part of the bay to perform tidal generating electricity:

In Fig.3A, tidal waves from the open sea spread towards the coast and the inner part of the bay. When the tidal waves enter into the bay and arrive at the inner part of the bay, transformation and time delay of the tidal waves occur, so that there is a dynamic water level difference between the inner part and the outer part of the bay, and the two-way tidal power bulb tubular hydrogenerator set can generate electricity.

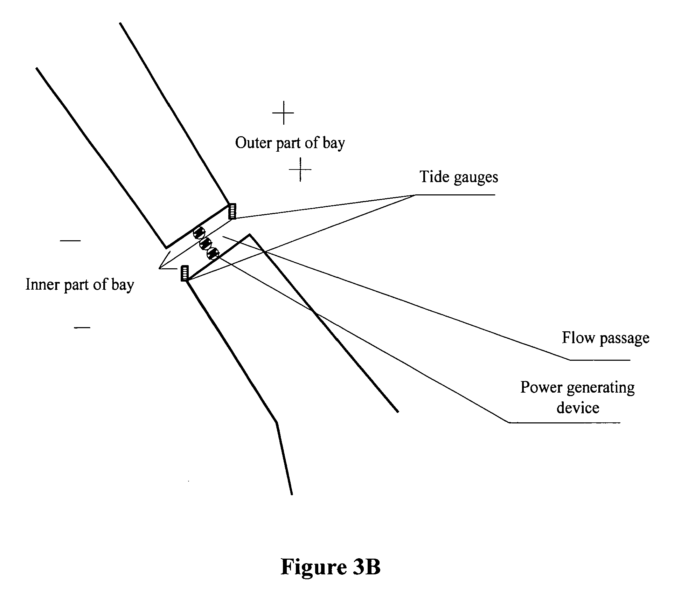

In Fig.3B, during a period of rising tide, there is a time-delay for the rising tidal waves within the bay, thus the tide level rises later than that outside the bay, so that the tide level outside the bay is higher than that of the inner part, with a negative water level difference present. The negative water level difference between the two sides is determined with the tide gauges in real time. When the negative water level difference is greater than the minimum dynamic water level difference for the power generating device to generate electricity, the power generating device is switched on for generating electricity in the reverse direction.

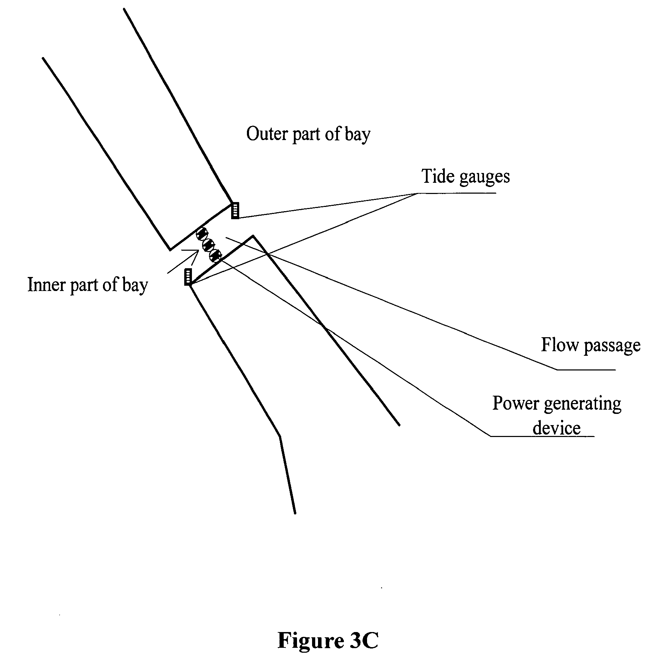

In Fig.3C, the water level difference between the two sides is determined with the two tide gauges in real time. When the negative water level difference is less than the minimum dynamic water level difference for the power generating device to generate electricity, the power generating device is switched off.

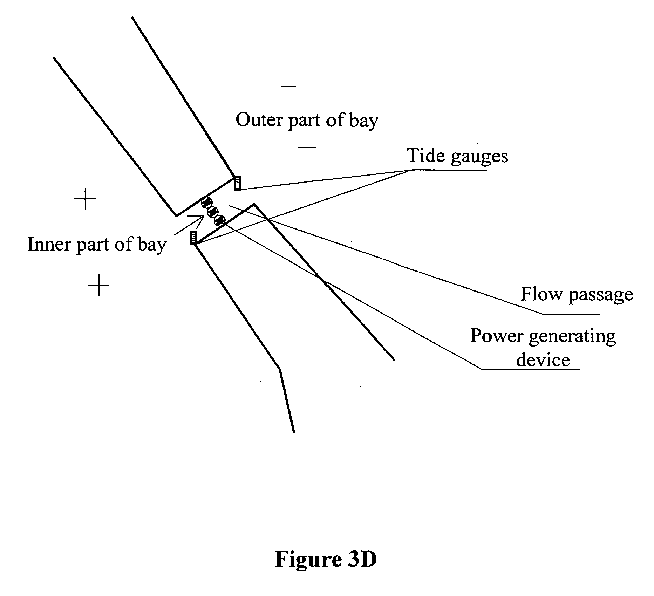

In Fig.3D, during a period of falling tide, there is a time-delay for the falling tidal waves within the bay, thus the tide level in the inner part of the bay falls later than that outside the bay, so that the tide level of the inner part of the bay is higher than that of the outer part of the bay, with a positive water level difference present. The positive water level difference between the two sides is determined with the tide gauges in real time. When the positive water level difference is greater than the minimum dynamic water level difference for the power generating device to generate electricity, the power generating device is switched on for generating electricity in the forward direction.

In the embodiment according to the present application, based on the characteristics of the rising and falling tides, the above procedure from Fig.3B to Fig.3D is repeated so as to implement tidal power generation by utilizing the dynamic water level difference between the outside and the inner part of the bay.

Corresponding to the embodiment of the method for generating electricity, the present application further provides an embodiment of a system for generating electricity.

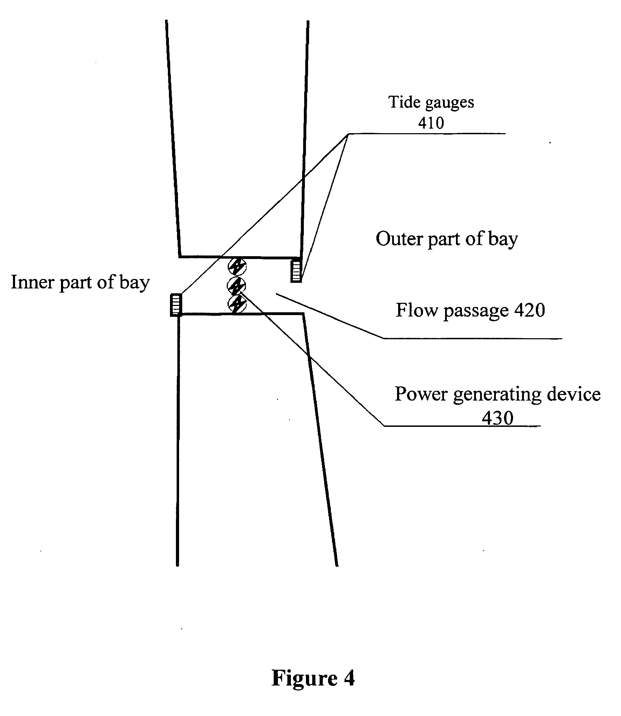

Fig.4 is a structural diagram of the embodiment of the system for generating electricity according to the present application. The system includes tide gauges 410, a flow passage 420 and a power generating device 430.

In the system, the tide gauges 410 are provided respectively at the two ends of the flow passage 420 to monitor in real time the dynamic water level difference between the inner part and the outer part of the bay, and to determine whether the monitored dynamic water level difference is greater than the minimum dynamic water level difference for driving the power generating device 430 to generate electricity;

The flow passage 420 is utilized to communicate the water in the inner part and the outer part of the bay.

The power generating device 430 is provided within the flow passage 420 to generate electricity by utilizing the dynamic water level difference monitored by the tide gauges 410 when the monitored dynamic water level difference is greater than the minimum dynamic water level difference.

The dynamic water level difference is caused by the tidal wave discrepancy between the inside and the outer part of the bay. The tidal waves are long period waves, and when they arrives at the bay, the transformation and delay of the tidal waves may occur, and both the nature and the tide time of the tidal waves between the inner part and the outer part of the bay are no longer the same, which leads to a dynamic water level difference between the inner part and the outer part of the bay. The tide gauges are specifically used to monitor that the tide level of the inner part of the bay is higher than that of the outer part of the bay and to determine that there is a positive water level difference between the inner part and the outer part of the bay; or the tide gauges are specifically used to monitor that the tide level outside the bay is higher than that of the inner part of the bay and to determine that there is a negative water level difference between the inner part and the outer part of the bay.

Specifically, the power generating device 430 may include two-way tidal power bulb tubular hydrogenerator set, and is specifically used to perform two-way electricity generation by driving the two-way tidal power bulb tubular hydrogenerator set with the dynamic water level difference. The power generating device 430 is preferably installed in the central part of the flow passage; and a plurality of power generating devices may be installed to generate electricity concurrently.

From the above description, it is known that the embodiments of the present application utilize the dynamic water level difference caused by the tidal wave discrepancy to generate electricity. In the embodiments, a flow passage is provided to communicate the water between the inner part and the outer part of the bay, a power generating device is installed within the flow passage, and tide gauges are provided respectively at the two ends of the flow passage. When it is monitored that there is a dynamic water level difference between the inner part and the outer part of the bay and the dynamic water level difference is greater than the minimum dynamic water level difference for driving the power generating device, the monitored dynamic water level difference is utilized to drive the power generating device to generate electricity. Since the embodiments of the present application utilize the dynamic water level difference caused by the tidal wave discrepancy to generate electricity and it is not necessary to construct a dam or a reservoir, the investment in generating electricity is less; and it is not likely to result in silting within the bay or the reservoir region, so that the service life of the power station is longer and the maintenance cost is less. As the water in both the inner part and the outer part of the bay can be used for generating electricity, the energy output does not tend to be limited by the storage capacity of a reservoir and the installed generating capacity may be larger. In addition, since the dynamic water level difference between the inner part and the outer part of the bay, which is utilized for generating electricity, is continued, the electricity generation may continue for a longer time. Besides, the ecology and environment around the bay may be affected less for there is no need to dam the bay.

The embodiments of the invention are described in a progressive way and the same or similar parts among the embodiments can be referred to each other. Each of the embodiments emphasizes the differences from others. Due to that the embodiment of the system is substantially similar to the embodiment of the method, the description for the system is relatively simple, and the relevant portion thereof can be understood by referring to the description of the method.

Although the present application has been described with the embodiments, those skilled in the art may realize that there are many variations and modifications to the present application without departing the spirit of the present application. It is aimed that these variations and modifications fall in the scope of the attached claims without departing the spirit of the present application.

## Claims

1. A method for generating electricity, which is used in tidal power generation, wherein a flow passage for communicating the water between an inner part and an outer part of a bay is provided, a power generating device is installed within the flow passage, and tide gauges are provided at two ends of the flow passage, the method comprising:
monitoring in real time a dynamic water level difference between the inner part and the outer part of the bay with the tide gauges;
determining whether the monitored dynamic water level difference is greater than a minimum dynamic water level difference for driving the power generating device; and
driving the power generating device to generate electricity with the monitored dynamic water level difference when the monitored dynamic water level difference is greater than the minimum dynamic water level difference.

2. The method according to claim 1, wherein monitoring in real time the dynamic water level difference between the inner part and the outer part of the bay with the tide gauges comprises:
monitoring, with the tide gauges, that a tide level of the inner part of the bay is higher than that of the outer part of the bay, and determining there is a positive water level difference between the inner part and the outer part of the bay.

3. The method according to claim 1, wherein monitoring in real time the dynamic water level difference between the inner part and the outer part of the bay with the tide gauges comprises:
monitoring, with the tide gauges, that a tide level of the outer part of the bay is higher than that of the inner part of the bay, and determining there is a negative water level difference between the inner part and the outer part of the bay.

4. The method according to claim 1, wherein the power generating device includes a two-way tidal power bulb tubular hydrogenerator set.

5. The method according to claim 4, wherein driving the power generating device to generate electricity with the monitored dynamic water level difference specifically is driving the two-way tidal power bulb tubular hydrogenerator set with the dynamic water level difference to perform two-way electricity generation.

6. A system for generating electricity, which is used in tidal power generation, that the system comprising a flow passage, a power generating device and tide gauges, wherein:
the flow passage is to communicate the water between an inner part and an outer part of a bay;
the tide gauges are provided respectively at two ends of the flow passage to monitor in real time a dynamic water level difference between the inner part and the outer part of the bay, and to determine whether the dynamic water level difference is greater than a minimum dynamic water level difference for driving the power generating device; and
the power generating device is provided within the flow passage to generate electricity by utilizing the monitored dynamic water level difference when the tide gauges determine that the monitored dynamic water level difference is greater than the minimum dynamic water level difference.

7. The system according to claim 6, wherein the tide gauges are specifically configured to monitor that a tide level of the inner part of the bay is higher than that of the outer part of the bay and to determine that there is a positive water level difference between the inner part and the outer part of the bay.

8. The system according to claim 6, wherein the tide gauges are specifically configured to monitor that a tide level of the outer part of the bay is higher than that of the inner part of the bay and to determine that there is a negative water level difference between the inner part and the outer part of the bay.

9. The system according to claim 6, wherein the power generating device includes a two-way tidal power bulb tubular hydrogenerator set.

10. The system according to claim 9, wherein the power generating device is specifically configured to drive the two-way tidal power bulb tubular hydrogenerator set with the dynamic water level difference to perform two-way electricity generation.
